(19) Europäisches Patentamt
European Patent Office
Office européen des brevets

(11) **EP 4 564 013 B1**

(12) **EUROPEAN PATENT SPECIFICATION**

(45) Date of publication and mention
of the grant of the patent:
**11.03.2026 Bulletin 2026/11**

(21) Application number: **24204568.0**

(22) Date of filing: **04.10.2024**

(51) International Patent Classification (IPC):
*G01Q 10/02* (2010.01)   *G01Q 10/04* (2010.01)
*G01Q 10/06* (2010.01)

(52) Cooperative Patent Classification (CPC):
**G01Q 10/06; G01Q 10/02; G01Q 10/04**

(54) **A METHOD OF LARGE AREA HIGH-THROUGHPUT ROTATIONAL SCANNING WITH SCANNING PROBE MICROSCOPE FOR LARGE AREA**

EIN VERFAHREN ZUM ROTATIONS-SCANNEN GROSSER FLÄCHEN MIT HOHER DURCHSATZ MIT EINEM RASTER-SONDENMIKROSKOP FÜR GROSSE FLÄCHEN

PROCÉDÉ DE BALAYAGE ROTATIONNEL À HAUT DÉBIT SUR GRANDE SURFACE AVEC MICROSCOPE À SONDE À BALAYAGE POUR GRANDE SURFACE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.12.2023 LT 2023546**

(43) Date of publication of application:
**04.06.2025 Bulletin 2025/23**

(73) Proprietors:
• **Valstybinis Moksliniu Tyrimu Institutas Fiziniu Ir Technologijos Mokslu Centras**
**02300 Vilnius (LT)**
• **Vilniaus Universitetas**
**01131 Vilnius (LT)**

(72) Inventors:
• **Ulcinas, Arturas**
**Vilnius (LT)**
• **Vaitekonis, Sarunas**
**Vilnius (LT)**
• **Novicenko, Viktor**
**Vilnius (LT)**

(74) Representative: **AAA Law**
**A. Gostauto 40B**
**03163 Vilnius (LT)**

(56) References cited:
• **CUI YUGUO ET AL: "An AFM system with multi-mode scanning for large-area measurement", 5TH INTERNATIONAL SYMPOSIUM ON ADVANCED OPTICAL MANUFACTURING AND TESTING TECHNOLOGIES: DESIGN, MANUFACTURING, AND TESTING OF MICRO- AND NANO-OPTICAL DEVICES AND SYSTEMS, vol. 7657, 13 May 2010 (2010-05-13), pages 7657N - 1, XP093176350, DOI: 10.1117/12.865476**
• **ULCINAS A ET AL: "Rotational scanning atomic force microscopy", NANOTECHNOLOGY, INSTITUTE OF PHYSICS PUBLISHING, BRISTOL, GB, vol. 28, no. 10, 3 February 2017 (2017-02-03), XP020314346, ISSN: 0957-4484, [retrieved on 20170203], DOI: 10.1088/1361-6528/AA5AF7**
• **GAO ET AL: "Surface profile measurement of a sinusoidal grid using an atomic force microscope on a diamond turning machine", PRECISION ENGINEERING, ELSEVIER, AMSTERDAM, NL, vol. 31, no. 3, 15 May 2007 (2007-05-15), pages 304 - 309, XP022079586, ISSN: 0141-6359, DOI: 10.1016/ J.PRECISIONENG.2007.01.003**

EP 4 564 013 B1

**Description**

TECHNICAL FIELD

The invention relates to a method using scanning probe microscopes such as atomic force microscopes (AFMs).

BACKGROUND ART

Scanning probe microscope (SPM), and its particular variation - atomic force microscope (AFM), are devices used for producing maps, or images, of various surface properties with very high spatial resolution for research and manufacturing process quality control in diverse areas of science and technology such as materials science, biology, semiconductor technology and so on. It is based on acquisition of data corresponding to the interaction between the probe and the investigated surface as the probe is translated (scanned) on the surface. High resolution of this technique arises from spatially constrained volume of interaction between the probe and the surface and reaches nanometer or in some cases even sub-nanometer order.

One of the important remaining limitations of the SPM application is limited data throughput, which can be quantified as time required to image area of specific size with required spatial resolution. This is rooted in the serial mode of data acquisition as the probe is scanned on the surface, and is primarily limited by the bandwidth of the electromechanical assembly (scanner) used for scanning the probe with respect to the sample in space (X, Y and Z coordinates). Driving the scanner above its resonant frequency leads to the excitation of undesired mechanical vibrations resulting in unpredictable position of the scanner and the high likelihood of scanner damage. Existing state-of-the-art high-speed SPM systems so far have been focusing on improving the achievable scanning speed by increasing the stiffness (therefore increasing the resonant frequency) of the scanning structure. While permitting to achieve very high image rates (up to 1000 frames per second), this approach leads to the significant reduction in achievable scanning area [1].

To increase the achievable area, additional larger range scanning assembly must be used, with subsequent panning of the sample in X and Y followed with stitching of the resulting component images into a composite image. For precise stitching, the specifications of this larger scanner must adhere to strict metrological requirements in two axes [2] [3]. In addition, this approach places significant limitations on the weight and dimensions of either the sample or the SPM detection assembly, depending on which one is being scanned.

Another approach used to increase the achievable scanning speed is to use the smooth scanning trajectories, such as spiral, Lissajous, cycloid and other by driving the orthogonal axes (XY) scanner with custom-designed control signals and subsequent remapping of the data samples to produce a conventional image. This approach is also limited in terms of achievable scan area.

US patent application No.: US15/235,717 (publication Nr.: US20170047199A1) discloses a method for formation of lithographic patterns.

International application No.: PCT/US2021/045614 (publication No.: WO2022036008) discloses a method for forming lithographic patterns for ophthalmoscopy outside the scope of SPM. The scan signal uses constant angular velocity, constant linear velocity, and transient segments.

The closest prior art is disclosed in [4][5], where SPM profilometry uses the method described in the US Patent No.: US10735674B2. The method is designed to achieve high speed scanning for imaging by generating spiral or concentric circle scan trajectories by combining rotational and radial motion. The main drawback of the method is the limitation of spatial resolution, linear and angular scanning speed.

A conceptually similar approach, employing the rotational axis as a fast scan axis and avoiding non-continuous (truncated) motion of the scanner at high frequencies, permitted significant improvement in scanning velocity and spatial resolution, but for relatively limited scanning area was reported [6].

The present invention is dedicated to overcoming of the above shortcomings and for producing further advantages over prior art.

BRIEF DESCRIPTION OF THE INVENTION

A scanning probe microscope used in the method of the invention comprises a multistage radial positioning system comprising a first stage having a nanometer resolution positioning capability, such as piezoelectric actuator, and an independent (closed-loop) position sensor, such as capacitive or piezoresistive sensors, henceforth referred to as the nanoscanner. Independent sensing of the position may also be implemented by an external system, such as interferometer. The scanning probe microscope also comprises at least one subsequent stage having substantially larger translation range than the first stage, such as motorized linear translation stage, henceforth referred to as the microscanner. According to claim 1 of the invention a method for scanning a surface using said scanning probe microscope comprises scanning a surface in overlapping ring patterns, where the distance between the rings and the degree of overlap are controlled by large travel range stages, and scanning inside the ring is achieved by a stage having nanometer-range resolution. Data acquisition according to the method comprises acquiring a signal corresponding to the probe-sample interaction and the sample rotation in a synchronized and simultaneous manner to enable sufficiently accurate determination of the azimuthal coordinate of a surface property data sample. Variability of data point density is reduced by in-situ adjusting angular velocity in dependence on the radial displacement. Tilt-related variation of the separation distance between the probe and the sample is compensated as the probe and the sample are rotated with respect to each other.

The invention enables the implementation of positioning, control and data acquisition system for large area scanning allowing to achieve high scanning velocities and data collection throughput for cantilever-based surface characterization instruments, and fast control of tilt-related probe-sample separation distance variation, while providing reduced metrological requirements for one axis and suitability for large samples. The invention described herein improves scanning system which uses rotational-translational motion to scan the probe with respect to the sample by substantially increasing achievable characterization surface area and data throughput without significant deterioration in spatial resolution.

## BRIEF DESCRIPTION OF THE DRAWINGS

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawings, in which:

Fig. 1 a) and b) shows functional block diagram of the preferred embodiment of the scanning probe microscope.

Fig. 2 shows diagram of scanning employing rotational-translational positioning and overlapping ring scanning: a) concentric scan path; b) spiral scan path; c) overlapping scan path.

Fig. 3 shows functional block diagram of the data flow in the data processing components of the scanning probe microscope.

Fig. 4 shows traces of electronic signals used for generating a surface map obtained in synchronized and simultaneous manner during the scanning according to the described patterns: a) probe signal corresponding to the surface profile generated by probe detection sensor; b) radial position signal generated by nanopositioning controller; c) rotation tracking signal generated by spindle rotation sensor; d) azimuthal coordinate signal calculated by data acquisition and processing device.

Fig. 5 shows a typical surface profile image of a calibration grating with nominal 21 nm height generated by the scanning probe microscope using the method according to the invention.

Fig. 6 shows functional block diagram of the compensation controller for tilt-related probe-sample separation distance variation.

Fig. 7 shows the functional block diagram of the internal structure of the harmonic oscillator's transfer function.

Fig. 8 shows functional block diagram of the zeroth harmonic oscillator's transfer function.

Preferred embodiments of the invention will be described herein below with reference to the drawings. Each figure contains the same numbering for the same or equivalent element.

## DETAILED DESCRIPTION OF THE INVENTION

It should be understood that numerous specific details are presented in order to provide a complete and comprehensible description of the invention embodiment. However, the person skilled in art will understand that the embodiment examples do not limit the application of the invention which can be implemented without these specific instructions. Well-known methods, procedures and components have not been described in detail for the embodiment to avoid misleading. Furthermore, this description should not be considered to be constraining the invention to given embodiment examples but only as one of possible implementations of the invention.

According to one aspect of the invention, a scanning probe microscope is disclosed. The scanning probe microscope comprises a probe (1) for scanning a sample (2), a support (3) for the probe (1), a probe detection sensor (4), a first stage being Z axis nanopositioner (5), and a second stage being XY axes nanopositioner. Both stages comprise a piezo actuator each, having a nanometer resolution positioning capability. XY nanopositioner has an independent (closed-loop) position sensor, such as capacitive or piezoresistive sensors, and henceforth is referred to as the nanoscanner (6). Alternatively, the independent readout of the position may be realized by the external system, such as laser interferometer. The scanning probe microscope also comprises a third stage being micropositioner (7) of the Z axis. The scanning probe microscope also comprises a fourth stage being XY axes micropositioner. The XY axis micropositioner has a substantially larger translation range than the nanoscanner (6), such as motorized linear translation stage, and henceforth is referred to as the microscanner (8). The scanning probe microscope further comprises a spindle (9). The spindle is used for actuating a rotational motion of the sample (2) with respect to a probe (1). The scanning probe microscope also comprises a rotation tracking sensor (10). The scanning probe microscope also comprises a nanopositioning controller (11) which controls the positions of the Z nanopositioner (5) and nanoscanner (6) and provides the readings of the respective independent position sensors. The scanning probe microscope also comprises a micropositioning controller (12) which controls the positions of the Z axis micropositioner (7) and XY axes microscanner (8) and provides the readings of respective positions. The scanning probe microscope also comprises a data acquisition and processing device (13), a spindle rotation controller (14), and input and display device (15).

The Z axis nanopositioner (5) and a Z axis micropositioner (7) are used for actuating a linear translation motion of the probe (1) with respect to a sample (2) in (Z) direction substantially perpendicular to the sample (2) plane.

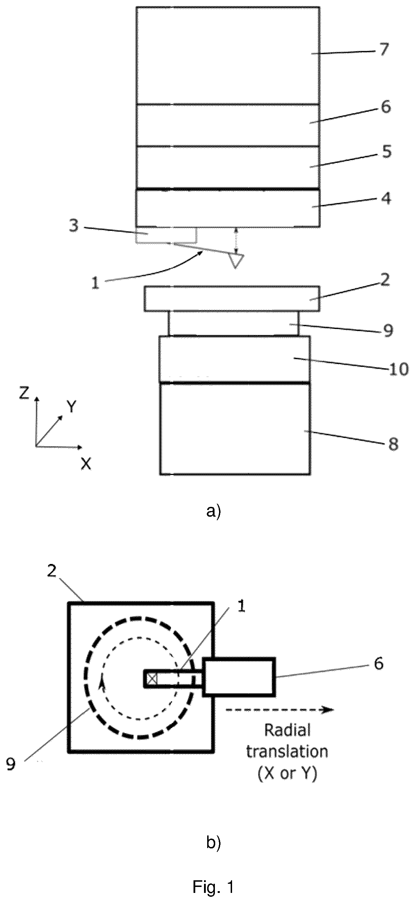

Figure 1 shows functional diagram of main components of the scanning probe microscope.

The probe (1) is a cantilevered probe (1) used to interrogate a specific property of a sample (2) surface, for example a surface profile. The interaction of the probe (1) and the sample (2) surface is detected by the probe detection sensor (4), for example optical lever detection or interferometer. Separation between the probe (1) and the sample (2) is controlled with the Z axis nanopositioner (5) having sub-nanometer resolution on Z axis. The nanoscanner (6) serves to translate the probe (1) with respect to the surface of the sample (2) providing the means to position the probe (1) at particular place on the surface or achieve conventional scanning the surface or linear translation in any of the selected radial directions X or Y. The Z axis micropositioner (7) provides coarse adjustment of the separation between the probe (1) and the sample (2). The spindle (9), such as a brushless direct current motor, implements rotational motion between the probe (1) and the sample (2). Rotation of the spindle (9) is tracked by the rotation tracking sensor (10) which produces electrical signal corresponding to the particular angular position of the spindle (9). Rotation tracking sensor (10) is for example a chopper type device, where the light is periodically transmitted through openings in a disk attached to the rotating spindle (9) and detected by a photodetector (not shown). The microscanner (8) allows coarse positioning of the probe (1) with respect to the sample (2) in the direction substantially parallel to the investigated surface.

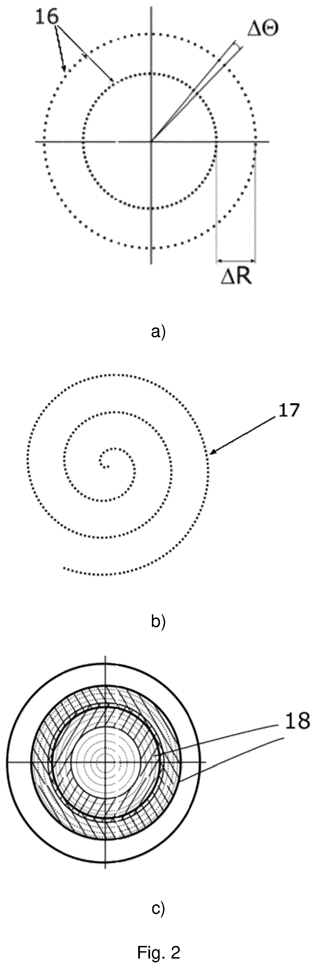

Figure 2 illustrates scanning arrangement and scanning strategies relevant to the preferred embodiment. As spindle (9) is rotated and nanoscanner (6) is linearly translated along one of the radial directions X or Y, the probe (1) scans surface of the sample (2) along either a concentric circle trajectory (16) or a spiral trajectory (17), depending on whether the nanoscanner (6) moves in a step-wise or continuous manner as the spindle (9) rotates. The dotted lines signify discrete sampling of electrical signals which represent radial position R of the probe (1) with respect to the sample (2) and angular position $\Theta$ of the spindle (9). In case of spindle (9) rotating with constant angular velocity $\omega$, angular position resolution is expressed as $\Delta\Theta = \omega / SR$, where $SR$ - sampling rate of the data acquisition and processing device (13). $\Delta R$ denotes radial stepping distance in the case of concentric circle trajectories (16).

In order to achieve nanometer range resolution, large area, and fast scanning, the linear translation system producing a radial translation comprises multiple stages - the XY axis microscanner (8) and the XY axes nanoscanner (6). The microscanner (8) is a motorized linear translation stage, having considerably larger translation range than the nanoscanner (6). The nanoscanner (6) and the microscanner (8) are mounted in the way which ensures that their translation axes are substantially parallel. Such hybrid system operates by generating scanning patterns of plurality of concentric or shifted overlapping rings (18), such as shown in Figure 2, as differently hatched areas. The nanometer resolution concentric (16) or spiral (17) trajectories with arbitrarily chosen step within the rings (18) are generated by the nanoscanner (6), and the translation between the rings (18) is achieved by means of the microscanner (8). The position sensors of the nanoscanner (6) and the microscanner (8) are combined to produce a radial position (coordinate) reading. Alternatively, the readout of the radial position may be provided by the external system, such as laser interferometer. The degree of the overlap between the rings (18) can be arbitrarily chosen by the operator.

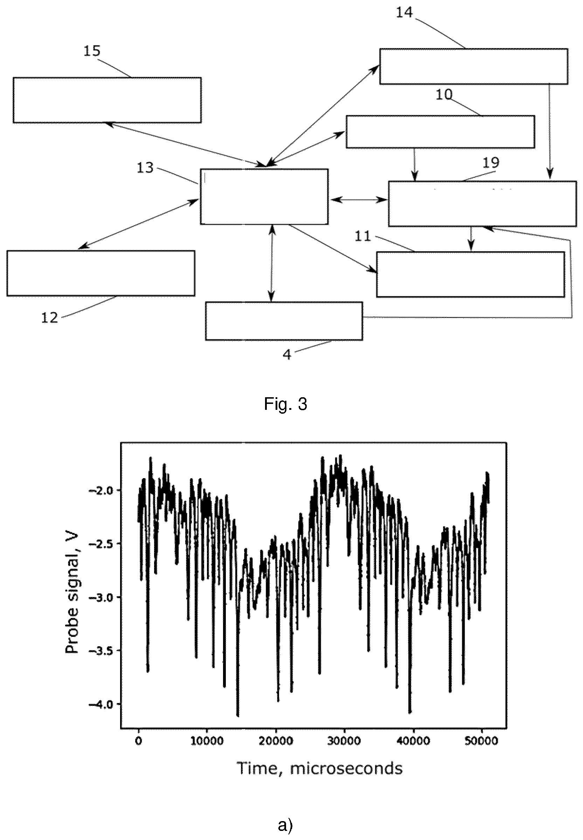

Figure 3 shows a functional diagram of the scanning probe microscope components relevant to the signal generation and data transfer and processing. The nanopositioning controller (11) controls the positions of the Z nanopositioner (5) and the nanoscanner (6) and relays the corresponding position sensor readings to the data acquisition and processing device (13). Likewise, micropositioning controller (12) controls the positions of Z micropositioner (7) and microscanner (8) and relays the corresponding position sensor readings to data acquisition and processing device (13). Spindle rotation controller (14) produces the electric signal which controls the rotation of the spindle (9).

In order to generate a map of the interrogated surface property, signals corresponding to the interaction of the probe (1) with the sample (2) surface and angular position of the spindle (9) (azimuthal coordinate), produced by probe detection sensor (4) and rotation tracking sensor (10) are sampled in a synchronized and simultaneous manner. In this way, azimuthal coordinate can be derived for each probe-sample interaction data sample. The signal corresponding to the radial position coordinate of the probe (1) with respect to the sample (2) produced by combining the signals from nanoscanner (6) and microscanner (8), or by external system such as laser interferometer, may be recorded in the same manner, or with reduced sampling rate with subsequent interpolation. These signals are processed by the data acquisition and processing device (13) to produce the readings of radial position with respect to the center of rotation of the spindle (9), R, and angular position (azimuthal coordinate) of the spindle (9), $\Theta$.

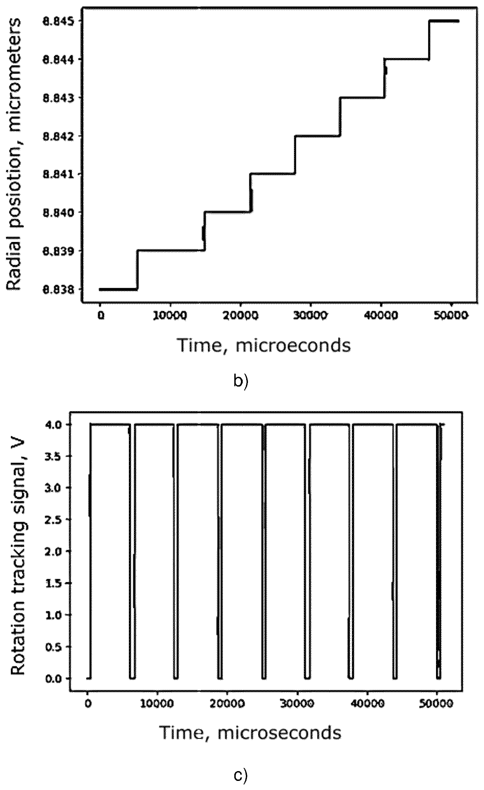

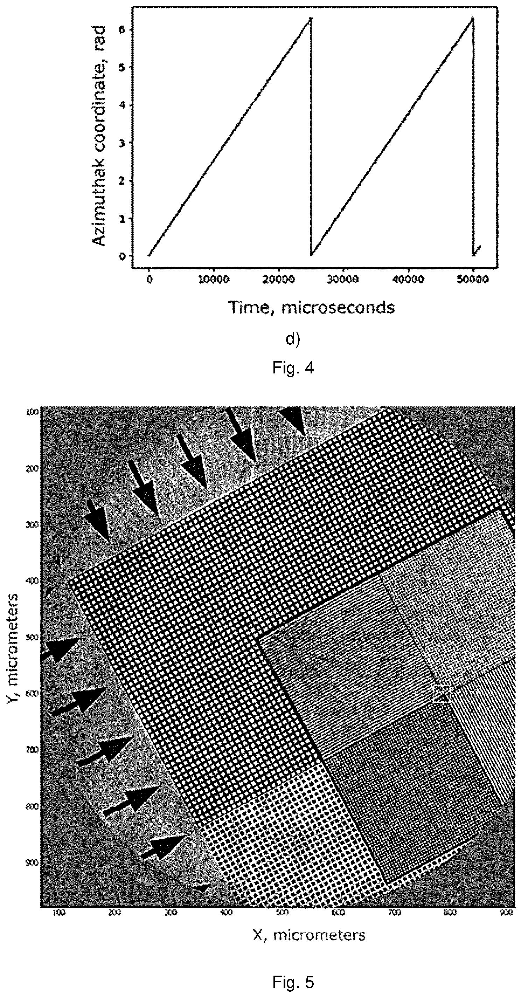

Figure 4 shows example of signal time series corresponding to (from top to bottom): the probe detection sensor (4), the nanoscanner (6), the spindle rotation sensor (10), and processed signal corresponding to the azimuthal coordinate $\Theta$, recorded over two revolutions of the spindle (9). Readings of the radial coordinate R and azimuthal coordinate $\Theta$ are then used by the data acquisition and processing device (13) to calculate Cartesian coordinates according to the equations:

$$X = R \cdot Cos(\Theta), \quad Y = R \cdot Sin(\Theta).$$

These coordinates are then used to place the value of the probe-surface interaction signal expressed in color onto a grid, thus producing the map of the interrogated surface property which may be displayed by an input and display device (15). Figure 5 shows the image generated following this procedure, of the calibration grating with nominal 21 nm height scanned using the AFM cantilever as a probe (1).

As the radial distance from the center of rotation increases, in case of angular velocity $\omega$ and the sampling rate SR of the data acquisition and processing device remaining constant, the linear velocity of the probe (1) with respect to the sample (2) increases, together with resolved value of the azimuthal coordinate $\Delta\Theta$ (Figure 2). This results in increasing spatial distance between the values of the probe detection sensor (3) being sampled. To reduce this undesirable effect, either the sampling rate SR or angular velocity $\omega$ should be controlled *in situ*. In a preferred embodiment described herein, the method is implemented to control the angular velocity $\omega$ by inputting the desirable range of linear velocity and calculating the relevant $\omega$. As the radial coordinate R increases, the spindle rotation controller (14) produces the spindle rotation control signal to set the $\omega$ in the desirable range. The desirable range of linear velocity and frequency of $\omega$ updates may be chosen by the operator.

In the context of this disclosure, separation between the probe and the surface should be understood as a distance between the probe support (3) and the surface of the sample (2).

While scanning the probe (1) on the surface of the sample (2) the separation between the probe (1) and the sample (2) varies significantly due to the presence of tilt between them. In conventional scanning at slow speed, this tilt is compensated by the feedback circuit which tracks the probe detection signal and outputs the control signal used to adjust the position of Z nanopositioner (5) in order to maintain the probe detection signal constant. In the recorded data, this tilt is manifested, for example, as slow variation in the height determined from probe-sample interaction signal generated by the probe detection sensor (4) from the actual height for "flat" plane and can be corrected by calculating and subtracting the appropriate plane from the sensor data. At high scanning speeds (centimeters per second), the variation of the sample surface height may be too fast to be corrected by the proportional-integral-derivative (PID)-feedback system conventionally employed in SPM, and only average height correction may be achievable. If this average correction is introduced with significant delay (latency) inherent in (PID)-type control, at least two undesirable effects may occur: first, poor control of the interaction force, leading to the excessive, and potentially damaging, probe force on the sample, or too low force potentially leading to the loss of contact with and therefore information about the sample; second, probe detection sensor (4) operating in the lower sensitivity range or outside of the sensitive range altogether. To alleviate this issue, in the following a method is disclosed which uses as inputs the signals of probe detection sensor (4) and spindle rotation data from spindle rotation controller (14) or rotation tracking sensor (10), and produces the control signal which eliminates tilt-related separation distance variation with negligible delay (latency).

In the case of the spindle (9) rotating with constant angular velocity $\omega$, tilt-induced variation of the probe-sample separation distance is manifested in the probe-sample interaction signal provided by probe detection sensor (3) as periodic signal containing a number of harmonics with frequency $k \cdot \omega$, where $k = 0, 1, 2, ..., N,$ with $N^*\omega$ the Nyquist frequency. The algorithm for the compensation of such separation distance variation disclosed herein is described by a linear time-invariant system. The input signal corresponding to the probe-surface interaction is fed to a linear time-invariant controller, and an output signal calculated in real-time is used to control the position of the Z nanopositioner (5) which regulates the separation between the probe (1) and the sample (2). This controller can be described by following transfer function:

$$C(s) = \frac{U(s)}{X(s)} = -2\gamma \left(\frac{\alpha s + \beta\omega}{s^2 + \omega^2}\right)\left[1 + \frac{\alpha}{s} + 2\sum_{m=2}^{n}\frac{\alpha s + \beta\omega}{s^2 + m^2\omega^2}\right]^{-1}.$$

Here $X(s)$ is the Laplace transform of the controller's input signal, and $U(s)$ is the Laplace transform of the controller's output signal. The number $n$ represents the number of harmonic oscillators upon which in the controller operates, so larger the $n$ is, greater the number of Fourier harmonics of the input signal is considered by the controller. It is worth mentioning that large values of $n$ require substantial computational resources for real-time operation. The controller has three parameters, $\alpha$, $\beta$, and $\gamma$, which are determined by experimental tuning for particular system to be controlled. The parameter $\gamma$ is related to the sensitivity of the probe-sample interaction sensor and may be positive or negative. Parameters $\alpha$ and $\beta$ define the stability of the controller, therefore they must be chosen from the stability region. In the limit of $n\to+\infty$ the stability region is described by the following inequalities: $\alpha>0$ and $\beta/\omega>-1/4$.

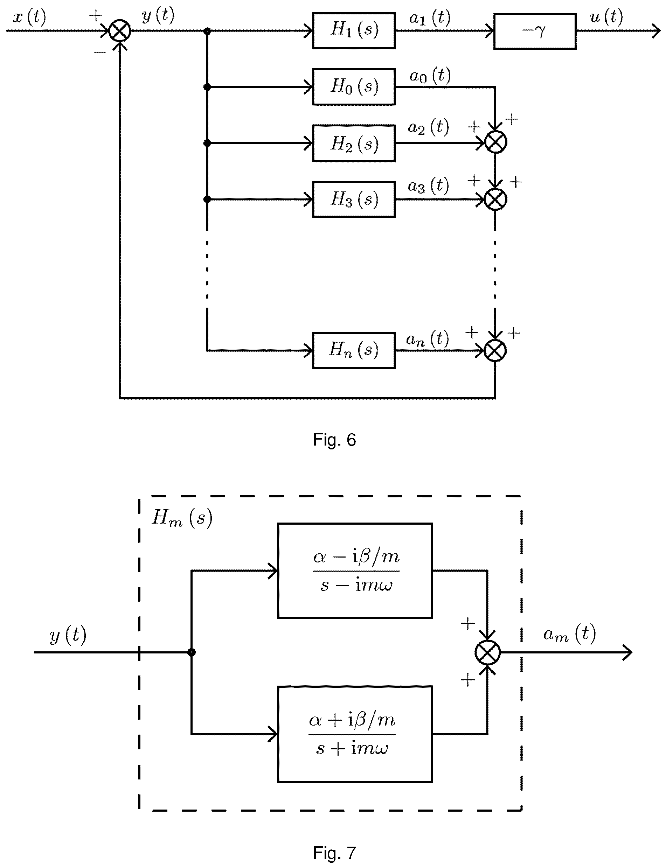

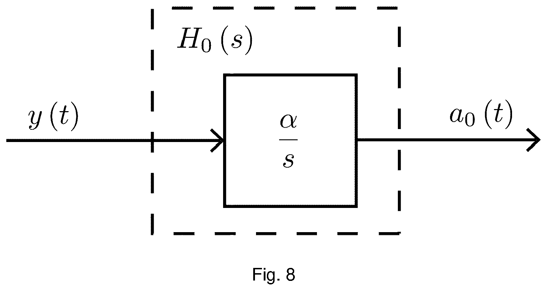

Controller transfer function described above can be represented as a block diagram shown in Figure 6. The controller has time series input signal $x(t)$, output signal $u(t)$, filtered input signal $y(t)$ and internal signals generated by the set of the harmonic oscillators $a_0(t)$, $a_1(t)$, $a_2(t)$, ..., $a_n(t)$. The filtered input signal $y(t)$ is fed to the harmonic oscillator's transfer function denoted by $H_m(s)$. The internal structure of the harmonic oscillator's transfer function $H_m(s)$ for $m=1, 2, ..., n$ is shown in Figure 7. The controller's parameters $\alpha$ and $\beta$ define coupling of the filtered input signal to the harmonic oscillator, and $i$ stands for imaginary unit, $i=\sqrt{-1}$. The internal structure of the zero harmonic oscillator's transfer function $H_0(s)$ is depicted in Figure 8.

The described separation distance variation compensation algorithm is intended for real-time operation, therefore while it may be implemented in main data acquisition and processing device (13), for efficient operation the dedicated implementation is recommended, such as application specific integrated circuit, microcontroller unit (MCU) or field programmable gate array (FPGA) -based electronic board, as separation distance variation controller (19). Control signal produced by the controller (19) is used as an input for nanopositioning controller (11) adjusting the position of Z nanopositioner (5), thus compensating the tilt-related separation distance variation between the probe (1) and the sample (2).

The embodiments described herein are aimed at providing means of high data throughput, high resolution, large area SPM mapping of the surface by the scanning apparatus and methods which utilize high scanning velocity (in the order of tens mm/s) and are suitable for large samples.

Although numerous characteristics and advantages together with structural details and features have been listed in the present description of the invention, the description is provided as an example fulfilment of the invention. The invention is defined by the appended claims.

Citations

1. L. M. Picco et al., "Breaking the Speed Limit with Atomic Force Microscopy," Nanotechnology 18, no. 4 (2007): 044030, https://doi.org/10.1088/0957-4484/18/4/044030)

2. P. Klapetek et al., "Large Area High-Speed Metrology SPM System," Nanotechnology 26, no. 6 (February 13, 2015): 065501, https://doi.org/10.1088/0957-4484/26/6/065501.

3. I. A. Mahmood and S. O. Reza Moheimani, "Making a Commercial Atomic Force Microscope More Accurate and Faster Using Positive Position Feedback Control," Review of Scientific Instruments 80, no. 6 (June 2009): 063705-8, https://doi.org/10.1063/1.3155790.

4. Wei Gao et al., "Surface Profile Measurement of a Sinusoidal Grid Using an Atomic Force Microscope on a Diamond Turning Machine," Precision Engineering 31, no. 3 (July 1, 2007): 304-9, https://doi.org/10.1016/j.precisioneng.2007.01.003;

5. Y. Cui et al., "An AFM System with Multi-Mode Scanning for Large-Area Measurement," in 5th International Symposium on Advanced Optical Manufacturing and Testing Technologies: Design, Manufacturing, and Testing of Micro- and Nano-Optical Devices and Systems, vol. 7657 (SPIE, 2010), 382-87, https://doi.org/10.1117/12.865476.

6. A. Ulčinas and Š. Vaitekonis. "Rotational Scanning Atomic Force Microscopy." *Nanotechnology* 28, no. 10 (February 2017): 10LT02

## Claims

1. A large area, high-throughput rotational scanning method using scanning probe microscope comprising scanning a sample surface with a probe along a sample plane, wherein scanning the sample (2) surface with the probe (1) comprises translating the probe (1) linearly relative to the sample (2) using a nanoscanner (6) actuator for nanoscale resolution motion in XY axes and a microscanner (8) for microscale resolution motion in XY axes, and rotating the sample (2) in XY plane using a spindle (9), for scanning surface of the sample (2) in patterns of plurality of concentric or shifted overlapping rings (18) in nanometer resolution concentric (16) or spiral (17) trajectories with arbitrarily chosen step within the rings (18) generated by the nanoscanner (6) where the translation between the rings (18) is achieved by the microscanner (8),
where the nanoscanner (6) has at least nanometer-scale resolution, and the microscanner (8) has at least micrometer-scale resolution and substantially larger travel range than the nanoscanner (6).

2. Method according to claim 1, where the method further comprises improving uniformity of sampling density of the sample (2) surface property sensed by said probe (1) during the scanning process when using a discrete sampling registration of the probe signal, angular position signal and radial position signal, where the improving the uniformity comprises the steps of:

   - selecting optimal range of the linear scanning velocity of the probe (1) with respect to the sample (2) surface;
   - registering radial position of the probe (1) with respect to a rotation center;
   - calculating a predicted radial position of the probe (1) with respect to the rotation center;
   - calculating angular velocity of the sample (2) with respect to the probe (1);
   - setting frequency of rotation of the sample (2) with respect to the probe (1) to the calculated desired value.

3. Method according to claim 1 or 2, further comprises reducing variation of the separation distance between the probe support (3) and the sample (2) surface related to an angle of inclination between the sample (2) and the support for said probe (1) by calculating the nanopositioning controller (11) control signal using the separation distance variation compensation controller (19) according to a transfer function implementing a defined set of harmonic oscillators at multiples of frequency of rotation of the sample (2), and using said control signal to adjust the separation between said probe support (3) and the sample (2) by Z nanopositioner (5),
wherein the information about the frequency of rotation of the sample (2) with respect to said probe (1) and signal corresponding to the separation distance between said probe (1) and the sample (2) are used as inputs for the controller (19) for calculating the Z nanopositioner control signal.

4. A method according to any previous claims further comprises generating maps of spatial distribution of the sample (2) surface property being sensed by said probe (1), where generating the maps comprises the steps of:

   - synchronized and simultaneous registration of at least the first signal from the probe (1) representing the value of the sample (2) surface property being sensed, the second signal representing the angular position of the rotating sample (2) with respect to the probe (1), and the third signal representing radial position of the probe (1) with respect to the sample (2) in the direction substantially parallel to the sample (2) surface plane;
   - calculating the values of the angular position and the radial displacement from the axis of rotation, where the angular position is azimuthal coordinate and the radial displacement from the axis of rotation is radial coordinate;
   - transforming the azimuthal coordinate and the radial coordinate into the Cartesian coordinates according to equations

$$X = R \cdot Cos(\Theta), \ Y = R \cdot Sin(\Theta),$$

   calculating position on the map grid onto which the corresponding sample surface property signal value is assigned.

## Patentansprüche

1. Großflächiges, hocheffizientes Rotationsabtastverfahren unter Verwendung eines Rastersondenmikroskops, umfassend Abtasten einer Probenoberfläche mit einer Sonde entlang einer Probenebene, wobei das Abtasten der Oberfläche der Probe (2) mit der Sonde (1) lineares Verschieben der Sonde (1) gegenüber der Probe (2) unter Verwendung eines Aktuators mit Nanoscanner (6) für Bewegungen mit nanoskaliger Auflösung auf XY-Achsen und eines Mikro-Scanners (8) für Bewegungen mit mikroskaliger Auflösung auf XY-Achsen und Drehen der Probe (2) auf der XY-Ebene unter Verwendung einer Spindel (9) umfasst, um eine Oberfläche der Probe (2) in Mustern aus einer Vielzahl von konzentrischen oder versetzten, sich überlappenden Ringen (18) in konzentrischen (16) oder spiralförmigen (17) Bahnen mit Nanometerauflösung mit einem beliebig gewählten Schritt innerhalb der Ringe (18), die durch den Nanoscanner (6) erzeugt werden, abzutasten, wobei die Verschiebung zwischen den Ringen (18) durch den Mikroscanner (8) erreicht wird, wobei der Nanoscanner (6) mindestens eine Auflösung im Nanometerbereich aufweist und der Mikroscanner (8) mindestens eine Auflösung im Mikrometerbereich und einen wesentlich größeren Verfahrbereich als der Nanoscanner (6) aufweist.

2. Verfahren nach Anspruch 1, wobei das Verfahren ferner Verbessern einer Gleichmäßigkeit einer Abtastdichte der Oberflächeneigenschaft der Probe (2), die durch die Sonde (1) während des Abtastvorgangs erfasst wird, umfasst, wenn eine diskrete Abtastregistrierung des Sondensignals, Winkelpositionssignals und Radialpositionssignals verwendet wird, wobei das Verbessern der Gleichmäßigkeit die folgenden Schritte umfasst:

- Auswählen eines optimalen Bereichs der linearen Abtastgeschwindigkeit der Sonde (1) in Bezug auf die Oberfläche der Probe (2);
- Registrieren einer radialen Position der Sonde (1) in Bezug auf einen Drehpunkt;
- Berechnen einer vorhergesagten radialen Position der Sonde (1) in Bezug auf den Drehpunkt;
- Berechnen einer Winkelgeschwindigkeit der Probe (2) in Bezug auf die Sonde (1);
- Einstellen der Drehfrequenz der Probe (2) in Bezug auf die Sonde (1) auf den berechneten Sollwert.

3. Verfahren nach Anspruch 1 oder 2, umfasst ferner Verringern einer Schwankung des Trennungsabstands zwischen der Sondenhalterung (3) und der Oberfläche der Probe (2) in Bezug auf einen Neigungswinkel zwischen der Probe (2) und der Halterung für die Sonde (1) durch Berechnen des Steuersignals der Nanopositionierungssteuerung (11) unter Verwendung der Trennungsabstandsschwankungskompensationssteuerung (19) gemäß einer Übertragungsfunktion, die einen definierten Satz harmonischer Oszillatoren bei Vielfachen einer Drehfrequenz der Probe (2) implementiert, und unter Verwendung des Steuersignals, um die Trennung zwischen der Sondenhalterung (3) und der Probe (2) durch einen Z-Nanopositionierer (5) anzupassen, wobei die Informationen über die Drehfrequenz der Probe (2) in Bezug auf die Sonde (1) und das Signal, die dem Trennungsabstand zwischen der Sonde (1) und der Probe (2) entsprechen, als Eingaben für die Steuerung (19) verwendet werden, um das Steuersignal des Z-Nanopositionierers zu berechnen.

4. Verfahren nach einem der vorherigen Ansprüche, ferner umfassend Erzeugen von Karten einer räumlichen Verteilung der Oberflächeneigenschaft der Probe (2), die durch die Sonde (1) erfasst wird, wobei das Erzeugen der Karten die folgenden Schritte umfasst:

- synchronisierte und gleichzeitige Registrierung von mindestens dem ersten Signal von der Sonde (1), das den Wert der Oberflächeneigenschaft der Probe (2), die erfasst wird, darstellt, dem zweiten Signal, das die Winkelposition der rotierenden Probe (2) in Bezug auf die Sonde (1) darstellt, und dem dritten Signal, das eine radiale Position der Sonde (1) in Bezug auf die Probe (2) in der im Wesentlichen parallelen Richtung zu der Oberflächenebene der Probe (2) darstellt;
- Berechnen der Werte der Winkelposition und der radialen Verschiebung von der Drehachse, wobei die Winkelposition azimutale Koordinate ist und die radiale Verschiebung von der Drehachse radiale Koordinate ist;
- Umwandeln der azimutalen Koordinate und der radialen Koordinate in die kartesischen Koordinaten gemäß Gleichungen

$$X = R \cdot Cos(\theta), Y = R \cdot Sin(\theta),$$

welche eine Position auf dem Kartengitter berechnen, dem der entsprechende Signalwert der Oberflächeneigenschaft der Probe zugewiesen wird.

## Revendications

1. Procédé de balayage rotatif à grande surface et à haut débit utilisant un microscope à sonde de balayage comprenant le balayage d'une surface d'échantillon avec une sonde le long d'un plan d'échantillon, dans lequel le balayage de la surface d'échantillon (2) avec la sonde (1) comprend la translation de la sonde (1) de manière linéaire par rapport à l'échantillon (2) en utilisant un actionneur de nano-balayage (6) pour un mouvement à résolution nanométrique dans les axes XY et un micro-balayage (8) pour un mouvement à résolution micrométrique dans les axes XY, et la rotation de l'échantillon (2) dans le plan XY en utilisant une broche (9), pour balayer la surface de l'échantillon (2) selon des motifs d'une pluralité d'anneaux concentriques ou décalés (18) se chevauchant selon des trajectoires concentriques (16) ou spirales (17) de résolution nanométrique avec un pas choisi arbitrairement à l'intérieur des anneaux (18) générés par le nano-balayage (6) où la translation entre les anneaux (18) est réalisée par le micro-balayage (8), où le nano-balayage (6) présente au moins une résolution à l'échelle nanométrique, et le micro-balayage (8) présente au moins une résolution à l'échelle micrométrique et une plage de déplacement sensiblement plus grande que le nano-balayage (6).

2. Procédé selon la revendication 1, où le procédé comprend en outre l'amélioration de l'uniformité de la densité d'échantillonnage de la propriété de surface de l'échantillon (2) détectée par ladite sonde (1) pendant le processus de balayage lors de l'utilisation d'un enregistrement d'échantillonnage discret du signal de sonde, du signal de position angulaire et du signal de position radiale, où l'amélioration de l'uniformité comprend les étapes consistant à :

- sélectionner une plage optimale de la vitesse de balayage linéaire de la sonde (1) par rapport à la surface de l'échantillon (2) ;
- enregistrer la position radiale de la sonde (1) par rapport à un centre de rotation ;
- calculer une position radiale prédite de la sonde (1) par rapport au centre de rotation ;
- calculer la vitesse angulaire de l'échantillon (2) par rapport à la sonde (1) ;
- régler la fréquence de rotation de l'échantillon (2) par rapport à la sonde (1) à la valeur souhaitée calculée.

3. Procédé selon la revendication 1 ou 2, comprenant en outre la réduction de la variation de la distance de séparation entre le support de sonde (3) et la surface de l'échantillon (2) liée à un angle d'inclinaison entre l'échantillon (2) et le support pour ladite sonde (1) par le calcul du signal de commande du contrôleur de nano-positionnement (11) au moyen du contrôleur de compensation de variation de distance de séparation (19) selon une fonction de transfert mettant en œuvre un ensemble défini d'oscillateurs harmoniques à des multiples de la fréquence de rotation de l'échantillon (2), et l'utilisation dudit signal de commande pour ajuster la séparation entre ledit support de sonde (3) et l'échantillon (2) par le nano-positionneur Z (5),
dans lequel les informations sur la fréquence de rotation de l'échantillon (2) par rapport à ladite sonde (1) et le signal correspondant à la distance de séparation entre ladite sonde (1) et l'échantillon (2) sont utilisés comme entrées pour le contrôleur (19) pour calculer le signal de commande du nano-positionneur Z.

4. Procédé selon l'une quelconque des revendications précédentes, comprenant en outre la génération de cartes de distribution spatiale de la propriété de surface de l'échantillon (2) détectée par ladite sonde (1), où la génération des cartes comprend les étapes suivantes :

- l'enregistrement synchronisé et simultané d'au moins le premier signal provenant de la sonde (1) représentant la valeur de la propriété de surface de l'échantillon (2) détectée, le deuxième signal représentant la position angulaire de l'échantillon (2) en rotation par rapport à la sonde (1), et le troisième signal représentant la position radiale de la sonde (1) par rapport à l'échantillon (2) dans la direction sensiblement parallèle au plan de surface de l'échantillon (2) ;
- le calcul des valeurs de la position angulaire et du déplacement radial par rapport à l'axe de rotation, où la position angulaire est la coordonnée azimutale et le déplacement radial par rapport à l'axe de rotation est la coordonnée radiale ;
- la transformation de la coordonnée azimutale et de la coordonnée radiale en coordonnées cartésiennes selon les équations

$$X = R \cdot Cos(\Theta), Y = R \cdot Sin(\Theta),$$

calculant la position sur la grille de carte sur laquelle la valeur de signal de propriété de surface d'échantillon correspondante est assignée.

a)

b)

Fig. 1

a)

b)

c)

Fig. 2

Fig. 3

a)

b)

c)

d)

Fig. 4

X, micrometers

Fig. 5

Fig. 6

Fig. 7

$$H_0\left(s\right)$$

$$y\left(t\right)$$

$$\frac{\alpha}{s}$$

$$a_0\left(t\right)$$

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 15235717 B
- US 20170047199 A1
- US 2021045614 W
- WO 2022036008 A
- US 10735674 B2

**Non-patent literature cited in the description**

- **L. M. PICCO et al.** Breaking the Speed Limit with Atomic Force Microscopy. *Nanotechnology*, 2007, vol. 18 (4), 044030, https://doi.org/10.1088/0957-4484/18/4/044030
- **P. KLAPETEK et al.** Large Area High-Speed Metrology SPM System. *Nanotechnology*, 13 February 2015, vol. 26 (6), 065501, https://doi.org/10.1088/0957-4484/26/6/065501
- **I. A. MAHMOOD ; S. O. REZA MOHEIMANI**. Making a Commercial Atomic Force Microscope More Accurate and Faster Using Positive Position Feedback Control. *Review of Scientific Instruments*, June 2009, vol. 80 (6), 063705-8, https://doi.org/10.1063/1.3155790
- **WEI GAO et al.** Surface Profile Measurement of a Sinusoidal Grid Using an Atomic Force Microscope on a Diamond Turning Machine. *Precision Engineering*, 01 July 2007, vol. 31 (3), 304-9, https://doi.org/10.1016/j.precisioneng.2007.01.003
- **Y. CUI et al.** An AFM System with Multi-Mode Scanning for Large-Area Measurement. *5th International Symposium on Advanced Optical Manufacturing and Testing Technologies: Design, Manufacturing, and Testing of Micro- and Nano-Optical Devices and Systems*, 2010, vol. 7657, 382-87, https://doi.org/10.1117/12.865476